# DEMANDE DE BREVET EUROPEEN

(11) **EP 4 016 677 A1**
(43) Date de publication de la demande: **22.06.2022**
(21) Numéro de dépôt: 21215957.8
(22) Date de dépôt: 20.12.2021
(51) Int. Cl.: H01M 8/0258, H01M 8/0202, H01M 8/1018, H01M 8/10

(54) **PROCÉDÉ DE FABRICATION D'UN GUIDE D'ÉCOULEMENT POUR RÉACTEUR ÉLECTROCHIMIQUE**

(30) Priorité: 21.12.2020 FR 2013832
(71) Demandeur: Commissariat à l'Energie Atomique et aux Energies Alternatives, 75015 Paris (FR)
(72) Inventeur: TREMBLAY, Denis, 38054 GRENOBLE Cedex 09 (FR); BLACHOT, Jean François, 38054 GRENOBLE Cedex 09 (FR); JOUAN, Augustin, 38054 GRENOBLE Cedex 09 (FR); POIROT-CROUVEZIER, Jean-Philippe, 38054 GRENOBLE Cedex 09 (FR)
(74) Mandataire: Bronchart, Quentin

(57) **Abrégé**

L'invention repose sur une utilisation novatrice de la technique d'impression par sérigraphie mesh pour réaliser des circuits fluidiques avec une profondeur de canaux 2 importantes (> 200 µm) et avec un ratio de forme égal ou supérieur à 1. En effet, grâce à l'utilisation de deux masques d'impression différents, il est possible de réaliser très simplement et pour un coût supplémentaire très faible (un seul masque de sérigraphie supplémentaire) des circuits fluidiques imprimés avec une hauteur de dents 222 dépassant 200 µm et ayant un ratio de forme égal ou supérieur à 1.

## Description

### DOMAINE TECHNIQUE

La présente invention concerne l'optimisation de la fabrication d'au moins un composant d'un réacteur électrochimique tel qu'une pile à combustible. Elle concerne plus particulièrement la réalisation de circuits fluidiques imprimés dans le cadre de la fabrication de cellules électrochimiques notamment destinées à une utilisation en pile à combustible, et en particulier à une utilisation en pile à combustible de température inférieure à 250°C.

### ETAT DE LA TECHNIQUE

Les piles à combustible sont par exemple envisagées comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible tel que du dihydrogène ou du méthanol est utilisé comme carburant de la pile à combustible.

Les piles à combustible à membrane d'échange de protons, dites PEM, fonctionnent à basse température, typiquement inférieure à 250°C et présentent des propriétés de compacité particulièrement intéressantes.

Principe de la pile à combustible

La pile à combustible est un générateur électrochimique qui permet de convertir de l'énergie chimique en énergie électrique par une réaction d'oxydo-réduction.

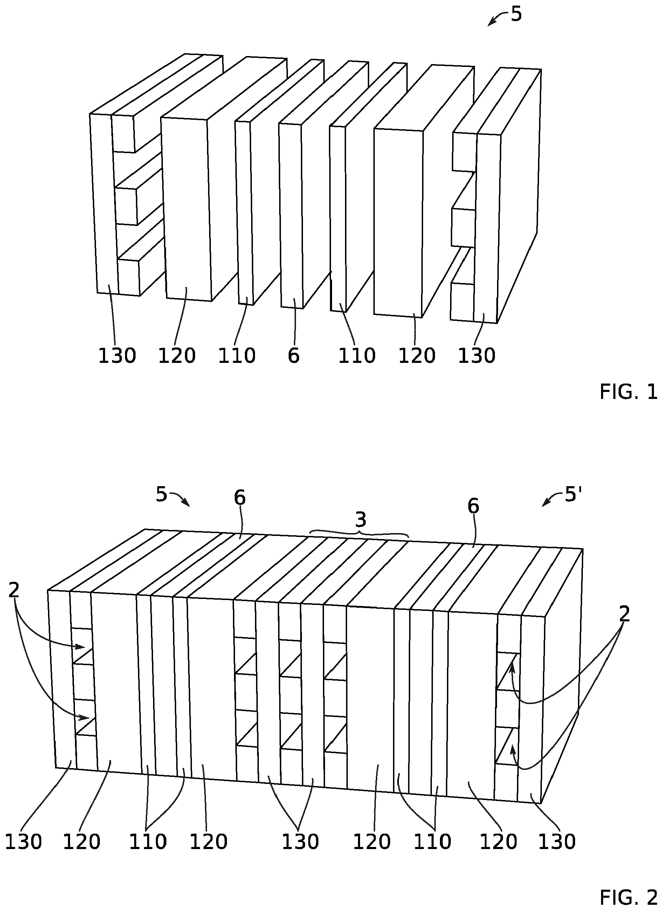

En référence à la figure 1 annexée, le cœur électrochimique 5 de la pile est constitué de deux électrodes 110 séparées par une membrane échangeuse d'ions 6. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible peut être constituée d'un empilement de cœurs électrochimiques 5, 5' montés en série appelé « stack ». Entre chaque empilement de cœurs électrochimiques 5, 5' peut être constituée une plaque bipolaire 3 pour permettre d'alimenter les électrodes 110 en réactifs. La pile à combustible peut donc être constituée d'un empilement de cellules unitaires séparées deux à deux par une plaque bipolaire 3.

Plus particulièrement, une pile à combustible à membrane échangeuse de protons ou PEMFC (de l'acronyme anglo-saxon « Proton Exchange Membrane Fuel Cell ») comprend au moins une cellule unitaire contenant un assemblage membrane-électrodes ou AME (110/6/110), constitué d'une membrane électrolytique 6 permettant le passage sélectif des protons et, de part et d'autre de cette membrane 6, les électrodes 110.

La membrane 6 est généralement constituée d'un ionomère perfluorosulfoné tel que le Nafion^{®}. Les électrodes 110, également appelées couches catalytiques ou actives, contiennent un catalyseur, avantageusement du platine (Pt), supporté par du carbone, et éventuellement un ionomère, en général le même que celui constituant la membrane 6.

Au niveau de l'anode, du dihydrogène (H2), utilisé comme carburant, est oxydé pour produire des protons traversant la membrane 6. Les électrons produits par cette réaction migrent vers le circuit fluidique, puis traversent un circuit électrique externe à la cellule 5 pour former un courant électrique. Au niveau de la cathode, de l'oxygène (O2) est réduit et réagit avec les protons ayant traversé la membrane 6 pour former de l'eau.

Des couches de diffusion gazeuse 120 ou GDL (de l'acronyme anglo-saxon « Gaz Diffusion Layer»), classiquement en fibres de graphite, peuvent être interposées entre les électrodes 110 et les plaques bipolaires 3.

Principe d'une plaque bipolaire

La plaque bipolaire 3 assure plusieurs fonctions, parmi lesquelles notamment :
- la distribution des réactifs et l'évacuation des sous-produits formés, possiblement via des canaux 2 et/ou orifices ménagés en son sein;
- le transfert des électrons générés au niveau des anodes des différentes cellules unitaires 5, ce qui implique que la plaque bipolaire 3 soit électriquement conductrice ;
- le refroidissement des cellules unitaires 5, possiblement via la circulation d'un liquide de refroidissement en son sein ;
- un support mécanique pour le cœur électrochimique 5.

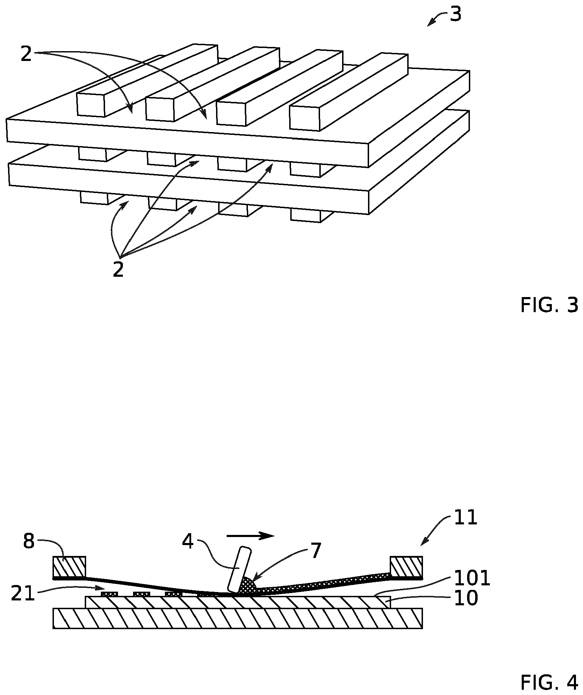

On peut considérer le cas typique d'une plaque bipolaire 3 telle qu'illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place d'obstacles, appelées ci-dessous nervures, comme des parois ou des plots, qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le cœur de pile, elles doivent être conducteurs électriques.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

Les canaux 2 du circuit fluidique sont encore à ce jour principalement réalisés par usinage ou formage à partir d'une plaque électriquement conductrice 130. Dans le premier cas, la matière est enlevée et, dans le second cas, les canaux 2 sont créés par déformation de la plaque électriquement conductrice 130. Les canaux 2 de la plaque sont conçus pour contrôler la perte de charge des écoulements qui y circulent.

Plus particulièrement, chaque circuit fluidique utilisé dans la pile à combustible à membrane échangeuse de protons est principalement réalisé à partir de métal embouti pour des raisons de coûts, d'encombrement et de performances. Généralement, l'épaisseur de la plaque électriquement conductrice 130 est comprise entre 1 et 4 mm et les canaux 2 ont de préférence une largeur comprise entre 0,2 et 2 mm, une profondeur comprise entre 0,2 et 0,5 mm, et un espacement (ou largeur de dent) compris entre 0,2 et 2 mm. La surface de diffusion des fluides est variable en fonction de la dimension de la pile et de la puissance souhaitée. Pour les applications de forte puissance, un circuit de refroidissement des fluides est généralement inséré entre les canaux de diffusion de l'hydrogène à l'anode et les canaux de diffusion de l'oxygène (ou de l'air) à la cathode. L'empilement de circuits fluidiques sur deux niveaux, voire sur trois niveaux (comme représenté sur la figure 3), forme une plaque bipolaire 3.

Néanmoins, le circuit fluidique obtenu par emboutissage de tôle métallique présente certains inconvénients, parmi lesquels notamment :
- un procédé de réalisation compliqué et un coût de production qui reste encore élevé, en particulier pour de faibles volumes de production ;
- le bombé de la plaque 130 occasionnée par le formage qui rend compliqué le dépôt des joints pour garantir l'étanchéité de la cellule 5 ;
- la difficulté pour diminuer encore l'épaisseur de la plaque 130 et son poids, déjà très optimisés, qui impactent fortement la densité d'énergie volumique et massique de la pile à combustible ; et
- la difficulté pour diminuer la largeur des canaux 2 afin d'améliorer les performances de la pile, du fait des limites de formage des tôles utilisées.

Afin de simplifier le procédé de fabrication et diminuer le coût des plaques bipolaires, qui représente approximativement 40% du coût total de la pile à combustible, les solutions mises en œuvre dans l'art antérieur ont notamment consisté à réaliser les obstacles à l'écoulement par impression sur un substrat plan métallique ou composite pour former un guide d'écoulement, puis la plaque bipolaire à partir d'au moins deux guides d'écoulement. Ce procédé permet, en variante, de réaliser le circuit fluidique sur la couche de diffusion gazeuse 120, en dehors de la plaque bipolaire 3.

D'autres agencements des circuits fluidiques, non détaillés ici, sont possibles. Par exemple, une plaque bipolaire 3 peut comprendre seulement deux circuits fluidiques, dédiés respectivement à chacun des deux réactifs. Par ailleurs, une plaque bipolaire 3 comprenant deux ou trois circuits fluidiques peut être constituée de plusieurs sous-ensembles disjoints, comprenant chacun au moins un circuit fluidique. Une plaque bipolaire 3 présentant les fonctions décrites précédemment est alors formée au moment de l'assemblage de la pile, lorsque les cellules sont empilées et qu'un effort de compression leur est appliqué.

Réalisation de circuits fluidiques imprimés

En référence à la figure 4, l'impression de circuits fluidiques conducteurs se fait grâce à l'utilisation d'un masque de sérigraphie 11, 12 contenant l'image du circuit fluidique à imprimer. On fait passer une encre conductrice 7 à thixotropie très élevée à travers ce masque 11, 12 et l'impression permet de déposer des motifs 21, 22 de nervures, appelées aussi dents, sur la face 101 d'un substrat 10, de sorte à obtenir un circuit fluidique conducteur.

Plus particulièrement, la sérigraphie par écran maillé (désigné par mesh en langue anglaise) est basée sur l'utilisation d'un masque ou écran 11, 12 constitué de deux composants principaux : un maillage (« mesh ») et une émulsion. Le maillage, tendu à l'intérieur d'un cadre 8, est le support mécanique de l'écran 11, 12. Sa porosité est définie pour qu'il puisse être facilement traversé par l'encre. L'émulsion est un dépôt réalisé sur le maillage, et imprégnant le maillage à l'endroit de son dépôt, de manière à former une couche étanche à l'encre 7. Les vides présents dans cette couche d'émulsion sont destinés à être remplis par l'encre 7 au moment de la sérigraphie. L'épaisseur de la couche d'émulsion détermine en grande partie l'épaisseur de la couche d'encre déposée.

Pour des raisons matérielles, il est impossible d'imprimer par sérigraphie 'mesh' des dépôts d'une épaisseur supérieure à 200 µm, car c'est l'épaisseur d'émulsion maximale déposable par les constructeurs de masques de sérigraphie 'mesh'. En effet, en déposant une émulsion plus épaisse, la surface de contact entre l'encre et l'émulsion devient plus importante, alors que la surface de contact entre le maillage et l'émulsion reste la même. Ainsi, avec une épaisseur d'émulsion supérieure à 200 µm, il y a un risque de mauvaise tenue de l'émulsion au maillage ainsi qu'un risque de mauvaise tenue de l'encre sur le substrat. Ce raisonnement reste le même pour toute impression avec un facteur de forme supérieur à 0,5, car, dans le cas d'un ratio de forme supérieur, on aura une surface de contact trop importante entre l'encre et l'émulsion par rapport à celle entre le maillage et l'émulsion.

Cela fait maintenant plusieurs années que l'impression par sérigraphie est utilisée pour fabriquer des circuits fluidiques conducteurs destinés à une utilisation en PEMFC. Différents documents de brevet ont fourni des descriptions plus ou moins détaillées des possibilités d'impression en termes de hauteur et de largeur. Des informations ont aussi été données sur la nature (solvant, matériau conducteur...) et les propriétés (viscosité, seuil d'écoulement.) des encres utilisées pour réaliser ces circuits fluidiques.

Ces documents affirment tous que l'impression de circuits fluidiques par sérigraphie présente une problématique de hauteur de dents imprimées (la hauteur maximale atteignable précisée est entre 200 et 400 µm). Pour l'instant, les constructeurs de masques n'arrivent pas à dépasser un facteur de forme (hauteur/largeur imprimée) de 1, la plupart des masques de sérigraphie ayant un facteur de forme de 0,5 (correspondant par exemple à une largeur de dents de 400 µm pour une hauteur de 200 µm).

Certains utilisent la technique d'impression en plusieurs couches, ou multicouches, pour augmenter cette hauteur, sans décrire en détail la méthode de réalisation. Cette technique ne permet pas d'accroitre indéfiniment la hauteur du dépôt imprimé. En effet, dès que le substrat 10 n'est plus plan, mais comporte au moins une première impression de nervures, cette dernière remplit partiellement, dans le masque, l'espace normalement destiné à recevoir l'encre. Chaque dépôt successif accentue ce phénomène, et rapidement l'épaisseur des couches déposées devient négligeable.

Le problème avec cette hauteur d'impression limitée est que plus la profondeur des canaux 2 du circuit fluidique est faible, plus le circuit provoque de pertes de charges et rend ainsi la pile moins performante. Or, dans le cas de circuits imprimés, un intérêt fort est de diminuer la largeur du pas dent/canal, ce qui réduira inexorablement la profondeur des canaux 2 puisque celle-ci est limitée par un facteur de forme de 1, au grand maximum, ou 0,5 dans la plupart des cas. Par exemple, si la largeur désirée de canal 2 est 100 µm, il sera impossible avec la technologie actuelle de dépasser une profondeur de canal de 100 µm. Dans l'application PEM, un circuit fluidique ayant une largeur et une profondeur de canal 2 toutes deux égales à 100 µm provoquerait trop de pertes de charges pour être utilisable.

Un objet de la présente invention est donc de proposer un procédé de fabrication de circuits fluidiques imprimés qui permette de pallier l'un au moins des inconvénients de l'art antérieur. Un objet de la présente invention est plus particulièrement de proposer un procédé de fabrication de circuits fluidiques imprimés qui permettent de diminuer la largeur du pas dent/canal des circuits fluidiques.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un procédé de fabrication d'au moins un guide d'écoulement pour réacteur électrochimique, comprenant les étapes suivantes :
a. fournir un substrat,
b. fournir un premier écran maillé comprenant des ouvertures configurées pour former un premier motif de nervures d'un premier guide d'écoulement,
c. fournir un deuxième écran maillé comprenant des ouvertures configurées pour former un deuxième motif de nervures du premier guide d'écoulement,
le deuxième motif étant tel que, lorsque le deuxième écran maillé est superposé au premier écran maillé, les ouvertures du deuxième écran maillé sont positionnables de sorte que chacune d'entre elles se situe, simultanément aux autres, au droit d'une ouverture du premier écran maillé et les ouvertures du deuxième écran maillé étant d'une surface réduite relativement aux ouvertures du premier écran maillé ; puis

Sur une première face du substrat :
d. imprimer une première couche d'une première encre électriquement conductrice par sérigraphie à l'aide du premier écran maillé,
e. former le premier motif de nervures par séchage de la première couche,
f. positionner le deuxième écran maillé de sorte qu'il repose en partie sur chacune des nervures du premier motif, chaque ouverture du deuxième écran maillé étant positionnée au droit d'une nervure du premier motif, puis
g. imprimer une deuxième couche d'une deuxième encre électriquement conductrice par sérigraphie à l'aide du deuxième écran maillé tel que précédemment positionné,
de sorte à obtenir une superposition du deuxième motif sur le premier motif après séchage de la deuxième couche.

Ainsi, l'invention repose sur une utilisation novatrice de la technique d'impression par sérigraphie mesh pour réaliser des circuits fluidiques avec une profondeur de canaux importante (> 200 µm) et avec un ratio de forme égal ou supérieur à 1. En effet, grâce à l'utilisation de deux masques d'impression ou écrans maillés différents, il est possible de réaliser très simplement et pour un coût supplémentaire très faible (un seul masque de sérigraphie supplémentaire) des circuits fluidiques imprimés avec une hauteur de dents dépassant 200µm et ayant un ratio de forme égal ou supérieur à 1.

Un deuxième aspect de l'invention concerne un procédé de fabrication d'une plaque bipolaire pour réacteur électrochimique, et en particulier pour pile à combustible à membrane échangeuse de protons, comprenant :
- la fabrication, par un procédé de fabrication selon le premier aspect de l'invention, d'au moins trois guides d'écoulement sur au moins deux substrats, et
- au moins un assemblage desdits au moins deux substrats entre eux de sorte que l'assemblage présente un desdits au moins trois guides d'écoulement entre deux desdits au moins deux substrats et deux autres desdits au moins trois guides d'écoulement de part et d'autre desdits au moins deux substrats.

Un troisième aspect de l'invention concerne un guide d'écoulement pour réacteur électrochimique obtenu par mise en oeuvre du procédé de fabrication selon le premier aspect de l'invention.

Un quatrième aspect de l'invention concerne une plaque bipolaire pour réacteur électrochimique, et en particulier pour pile à combustible à membrane échangeuse de protons, obtenue par mise en oeuvre du procédé de fabrication selon le deuxième aspect de l'invention.

Selon d'autres de ses aspects, l'invention peut concerner au moins l'un parmi :
- Un guide d'écoulement pour réacteur électrochimique, par exemple obtenu par mise en œuvre du procédé selon le premier aspect de l'invention, comprenant un substrat sur au moins une des deux faces duquel s'étendent des nervures définissant des canaux d'écoulement, les nervures étant à base d'au moins un matériau différent du matériau à base duquel le substrat est constitué et/ou présentant une épaisseur strictement supérieure à une largeur des canaux d'écoulement ;
- Un guide d'écoulement tel qu'introduit ci-dessus, dans lequel chaque nervure s'étend depuis l'au moins une des deux faces du substrat par une première portion d'une épaisseur sensiblement égale à la largeur des canaux d'écoulement et constituée à base d'un premier matériau conducteur et une deuxième portion s'étendant depuis la première portion, de largeur réduite relativement à la largeur de la première portion de chaque nervure et constituée à base d'un deuxième matériau conducteur, le cas échéant le deuxième matériau conducteur étant différent du premier matériau conducteur ;

- Un guide d'écoulement selon la caractéristique précédente, dans lequel chaque nervure comprend en outre une troisième portion s'étendant d'un côté au moins, de préférence des deux côtés, de la deuxième portion, jusqu'à recouvrir le cas échéant la deuxième portion, la troisième portion présentant de préférence une largeur sensiblement égale à la largeur de la première portion et/ou de préférence s'étendant au droit de la première portion, la troisième portion étant constituée à base d'un troisième matériau conducteur, le cas échéant le troisième matériau conducteur étant différent de l'un au moins parmi le premier matériau conducteur et le deuxième matériau conducteur ;
- Une plaque bipolaire pour réacteur électrochimique, et en particulier pour pile à combustible à membrane échangeuse de protons, comprenant au moins trois guides d'écoulement tel qu'introduits ci-dessus sur au moins deux substrats assemblés entre eux de sorte que l'assemblage présente un desdits au moins trois guides d'écoulement entre deux desdits au moins deux substrats et deux autres desdits au moins trois guides d'écoulement de part et d'autre desdits au moins deux substrats ; et
- Une plaque bipolaire pour réacteur électrochimique, et en particulier pour pile à combustible à membrane échangeuse de protons, comprenant au moins deux guides d'écoulement tel qu'introduits ci-dessus sur au moins un substrat de sorte à présenter un desdits au moins deux guides d'écoulement sur une première face dudit au moins un substrat et un desdits au moins deux guides d'écoulement sur une seconde face dudit au moins un substrat.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'un réacteur électrochimique selon un mode de réalisation de l'art antérieur.
La figure 2 représente schématiquement une vue en perspective regroupée d'un empilement de deux parties d'un réacteur électrochimique selon son mode de réalisation illustré sur la figure 1.
La figure 3 représente une vue en perspective d'une partie au moins d'une plaque bipolaire destinée à être située entre deux cœurs électrochimiques d'un réacteur électrochimique selon son mode de réalisation illustré sur la figure 1.
La figure 4 est une représentation schématique en coupe de côté d'une étape d'impression par sérigraphie pour la formation d'un motif d'impression.
La figure 5A représente schématiquement une vue de dessus du premier écran maillé mis en œuvre au cours du procédé de fabrication d'un guide d'écoulement selon le premier aspect de l'invention.
La figure 5B représente schématiquement une vue en coupe, selon un plan comprenant l'axe A-A illustré sur la figure 5A, du premier écran maillé tel qu'illustré sur la figure 5A.
La figure 5C représente schématiquement une vue de dessus du deuxième écran maillé mis en œuvre au cours du procédé de fabrication d'un guide d'écoulement selon le premier aspect de l'invention.
Les figures 6 à 11 représentent schématiquement des vues en coupe illustrant différentes étapes d'un mode de réalisation du procédé de fabrication d'un guide d'écoulement selon le premier aspect de l'invention.
Les figures 12 à 14 illustrent chacune une vue en coupe schématique d'un exemple de configuration d'un guide d'écoulement obtenu par mise en œuvre d'un mode de réalisation du procédé de fabrication selon le premier aspect de l'invention.
Les figures 15 et 16 illustrent chacune une vue en coupe schématique d'un exemple de configuration d'une plaque bipolaire obtenue par mise en œuvre d'un mode de réalisation du procédé de fabrication selon le deuxième aspect de l'invention.
La figure 17 illustre une vue en coupe schématique d'un exemple de configuration d'un guide d'écoulement obtenu par mise en œuvre d'un mode de réalisation du procédé de fabrication selon le premier aspect de l'invention.
La figure 18 illustre une association du guide d'écoulement de la figure 17 avec d'autres composants d'un réacteur électrochimique.
La figure 19 illustre une vue en coupe schématique d'un exemple de configuration d'un guide d'écoulement obtenu par mise en œuvre d'un mode de réalisation du procédé de fabrication selon le premier aspect de l'invention.
La figure 20 illustre une association du guide d'écoulement de la figure 19 avec un autre composant d'un réacteur électrochimique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

Selon un exemple du premier aspect de l'invention, les ouvertures du deuxième écran maillé sont configurées et positionnées pour pouvoir être sensiblement centrées sur les nervures du premier motif lors du positionnement du deuxième écran maillé ;

Selon un autre exemple du premier aspect de l'invention, la première encre électriquement conductrice et la deuxième encre électriquement conductrices sont identiques entre elles ;

Selon une caractéristique facultative du premier aspect de l'invention, le procédé de fabrication tel qu'introduit ci-dessus peut en outre comprendre les étapes suivantes :
h. positionner le premier écran maillé de sorte qu'il repose en partie sur chacune des nervures du deuxième motif, les ouvertures du premier écran maillé étant en partie occupées par au moins une partie des nervures du deuxième motif, et de préférence sensiblement centrées sur les nervures du deuxième motif, et
i. imprimer une troisième couche d'une troisième encre électriquement conductrice par sérigraphie à l'aide du premier écran maillé tel que précédemment positionné,
de sorte à obtenir un élargissement des nervures du deuxième motif et par voie de conséquence des nervures élargies, après séchage de la troisième couche d'encre.

Ainsi, aucun compromis n'est nécessaire sur la surface de conduction électrique en jeu ou sur la tenue mécanique des nervures.

Selon la caractéristique facultative précédente, le procédé de fabrication selon le premier aspect de l'invention peut comprendre en outre au moins une fois la séquence d'étapes suivantes :
j. positionner le deuxième écran maillé de sorte qu'il repose en partie sur chacune des nervures élargies, puis
k. imprimer une autre couche d'une encre électriquement conductrice par sérigraphie à l'aide du deuxième écran maillé tel que précédemment positionné, de sorte à obtenir, après séchage, une superposition du deuxième motif sur les nervures élargies, puis
l. positionner le premier écran maillé de sorte qu'il repose en partie sur chacune des nervures du deuxième motif précédemment imprimé, les ouvertures du premier écran maillé étant en partie occupées par au moins une partie des nervures du deuxième motif superposées aux nervures élargies, et de préférence sensiblement centrées sur lesdites nervures du deuxième motif, et
m. imprimer une autre couche d'une encre électriquement conductrice par sérigraphie à l'aide du premier écran maillé tel que précédemment positionné,
de sorte à obtenir, après séchage, un élargissement des nervures du deuxième motif et par voie de conséquence de nouvelles nervures élargies ;

Selon l'exemple précédent, chaque écran maillé comprenant un maillage et une émulsion, le premier écran maillé est positionné sur le deuxième motif de sorte qu'une partie de son maillage repose sur chacune des nervures du deuxième motif ;

En alternative à la caractéristique facultative introduite ci-dessus, le procédé peut comprendre en outre :
- fournir au moins un troisième écran maillé comprenant des ouvertures configurées pour former un troisième motif de nervures du premier guide d'écoulement,
- le troisième motif étant tel que, lorsque ledit au moins un troisième écran maillé est superposé à un écran maillé précédemment utilisé, les ouvertures dudit au moins un troisième écran maillé sont positionnables de sorte que chacune d'entre elles se situe, simultanément aux autres, au droit d'une ouverture de l'écran maillé précédemment utilisé et les ouvertures dudit au moins un troisième écran maillé étant d'une surface réduite relativement aux ouvertures de l'écran maillé précédemment utilisé,
- positionner ledit au moins un troisième écran maillé de sorte qu'il repose en partie sur chacune des nervures du motif précédemment formé, chaque ouverture dudit au moins un troisième écran maillé étant positionnée au droit d'une nervure du motif précédemment formé, puis
- imprimer au moins une troisième couche d'encre électriquement conductrice par sérigraphie à l'aide dudit au moins un troisième écran maillé tel que précédemment positionné, de sorte à obtenir une superposition du troisième motif sur le motif précédemment formé après séchage de ladite au moins une troisième couche. Préférentiellement, les ouvertures dudit au moins un troisième écran maillé sont configurées et positionnées pour pouvoir être sensiblement centrées sur les nervures du motif précédemment formé lors du positionnement dudit au moins un troisième écran maillé. Selon un exemple, la deuxième encre électriquement conductrice et la troisième encre électriquement conductrices sont identiques entre elles ;

Selon un exemple du premier aspect de l'invention, la différence de surface entre les ouvertures du deuxième écran maillé et les ouvertures du premier écran maillé est telle que, lorsque le deuxième écran maillé est positionné sur le premier motif, le deuxième écran maillé repose sur 5 à 20% d'une surface supérieures des nervures du premier motif ;

Selon un autre exemple du premier aspect de l'invention, la différence de surface entre les ouvertures du deuxième écran maillé et les ouvertures du premier écran maillé comprend, voire consiste en, une différence de largeur entre les ouvertures du deuxième écran maillé et les ouvertures du premier écran maillé qui est sensiblement supérieure à 40 µm, les ouvertures du deuxième écran maillé étant d'autant plus préférentiellement sensiblement centrées sur les nervures du premier motif, lorsque le deuxième écran maillé est positionné sur le premier motif, que la différence de largeur entre les ouvertures du deuxième écran maillé et les ouvertures du premier écran maillé est proche de sa valeur minimale.

Selon un autre exemple du premier aspect de l'invention, chaque écran maillé comprenant un maillage et une émulsion, le deuxième écran maillé est positionné sur le premier motif, de sorte qu'une partie de son émulsion repose en partie sur chacune des nervures du premier motif.

Selon un autre exemple du premier aspect de l'invention, chaque écran maillé comprenant un maillage et une émulsion, l'émulsion présente une épaisseur sensiblement comprise entre 100 et 200 µm, de préférence sensiblement comprise entre 150 et 200 µm, et encore plus préférentiellement sensiblement égale à 200 µm, et/ou le maillage présente une épaisseur sensiblement comprise entre 50 et 150 µm, de préférence sensiblement comprise entre 80 et 120 µm, et encore plus préférentiellement sensiblement égale à 100 µm ;

Selon un autre exemple du premier aspect de l'invention, le premier écran maillé comprenant un maillage et une émulsion, l'émulsion du premier écran maillé présentant un motif qui est le négatif du premier motif et qui définit des canaux d'écoulement du premier guide entre les nervures du premier motif dont la largeur est définie par les ouvertures du premier écran maillé, la largeur des canaux d'écoulement est sensiblement comprise entre 1 et 4 fois la largeur des nervures du premier motif, de préférence sensiblement comprise entre 1 et 2 fois la largeur des nervures du premier motif, et encore plus préférentiellement sensiblement égale à la largeur des nervures du premier motif ;

Selon un autre exemple du premier aspect de l'invention, chaque impression par sérigraphie de chaque couche d'encre électriquement conductrice est réalisée en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹. Une encre conductrice présentant ces caractéristiques est dite à thixotropie très élevée ;

Selon un autre exemple du premier aspect de l'invention, le substrat fourni comprend au moins l'un parmi une couche de diffusion gazeuse du réacteur électrochimique, une couche d'électrode du réacteur électrochimique et une plaque électriquement conductrice ;

Selon un autre exemple du premier aspect de l'invention, le substrat fourni étant une plaque électriquement conductrice, les étapes d à g du procédé sont répétées sur la deuxième face du substrat pour y fabriquer un second guide d'écoulement. En complément, les étapes h et i, voire les étapes h à m, peuvent être répétées sur la deuxième face du substrat pour y fabriquer le second guide d'écoulement.

On entend par un premier élément « superposable » à un deuxième élément qu'une projection du premier élément dans un plan de superposition entre les éléments s'inscrit entièrement dans une projection du deuxième élément dans le même plan de superposition, ou inversement.

On entend par un paramètre « sensiblement égal/supérieur/inférieur à » une valeur donnée que ce paramètre est égal/supérieur/inférieur à la valeur donnée, à plus ou moins 20%, voire 10%, près de cette valeur. On entend par un paramètre «sensiblement compris entre » deux valeurs données que ce paramètre est au minimum égal à la plus petite valeur donnée, à plus ou moins 20%, voire 10%, près de cette valeur, et au maximum égal à la plus grande valeur donnée, à plus ou moins 20 %, voire 10 %, près de cette valeur.

Pour répondre au problème de la hauteur d'impression en sérigraphie mesh, notamment pour la fabrication d'un guide d'écoulement dédié à une application PEM, une technique a été imaginée et réalisée : l'impression pyramidale.

Cette impression pyramidale est réalisée par mise en œuvre du procédé de fabrication d'au moins un guide d'écoulement pour réacteur électrochimique selon le premier aspect de l'invention.

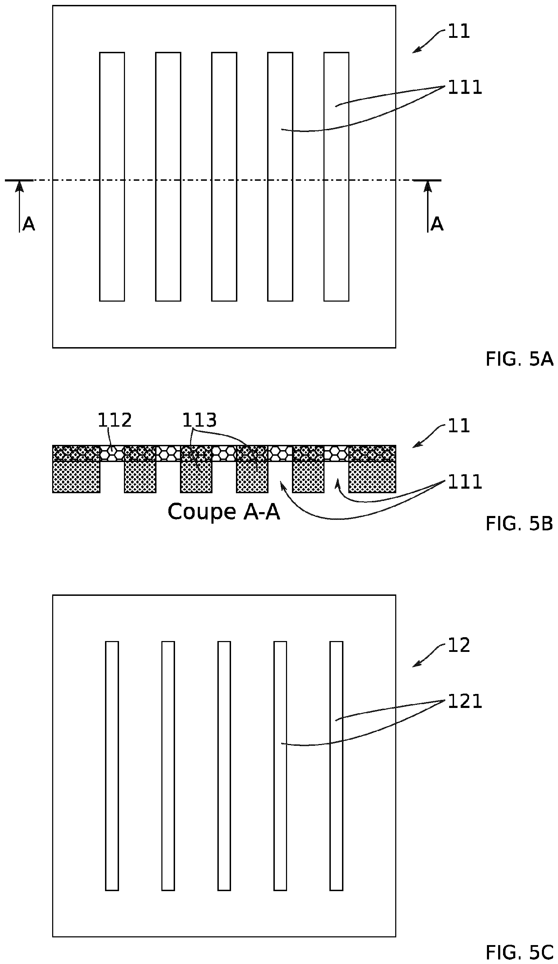

En référence aux figures 4 et 5A à 5C, le procédé selon le premier aspect de l'invention comprend tout d'abord les étapes suivantes :
- Fournir un substrat 10,
- Fournir un premier écran maillé 11 comprenant des ouvertures 111 configurées pour former un premier motif 21 de nervures 211 d'un premier guide d'écoulement 1, et
- Fournir un deuxième écran maillé 12 comprenant des ouvertures 121 configurées pour former un deuxième motif 22 de nervures 221 du premier guide d'écoulement 1.

Chaque écran maillé 11, 12 comprend un maillage 112, 122 et une émulsion 113, 123. Typiquement, chaque émulsion 113, 123 présente une épaisseur sensiblement comprise entre 100 et 200 µm, de préférence sensiblement comprise entre 150 et 200 µm, et encore plus préférentiellement sensiblement égale à 200 µm ; chaque maillage 112, 122 présente une épaisseur sensiblement comprise entre 50 et 150 µm, de préférence sensiblement comprise entre 80 et 120 µm, et encore plus préférentiellement sensiblement égale à 100 µm. L'invention n'est toutefois pas limitée à de telles valeurs d'épaisseur d'émulsion et/ou de maillage. En outre, d'autres paramètres, tels que la taille de maille de chaque maillage, peuvent être à considérer.

Sur la figure 5B, on observe que les ouvertures 111 du premier écran maillé 11 correspondent à des zones du premier écran maillé 11 qui ne sont pas recouvertes de l'émulsion 113. Au niveau de ses ouvertures 111, on observe également que le maillage 112 du premier écran maillé 11 n'est pas imbibée d'émulsion 113. L'encre à imprimer via cet écran 11 va donc pouvoir passer à travers le maillage 112 et remplir les espaces laissés vides par l'émulsion 113.

Le deuxième écran maillé 12 présente une structure correspondante. Toutefois, le deuxième motif 22 est superposable au premier motif 21 et les ouvertures 221 du deuxième écran maillé 12 sont d'une surface réduite relativement aux ouvertures 211 du premier écran maillé 21.

Autrement dit, si l'on découpe les figures 5A et 5C, qu'on les superpose l'une à l'autre (avec les ouvertures orientées dans un même sens) et que l'on observe par transparence la superposition obtenue, on s'aperçoit que chaque ouverture 121 du deuxième écran maillé 12 s'inscrit dans une ouverture 111 du premier écran maillé 11. Dans l'exemple illustré sur les figures 5A et 5C, seules les extrémités des ouvertures 111 et 121 coïncideraient entre elles, puisque les ouvertures 121 du deuxième écran maillé 12 sont longitudinalement centrées relativement aux ouvertures 111 du premier écran maillé 11. En effet, la superposition des figures 5A et 5C entre elles montrerait que la forme longitudinale de chaque ouverture 111 présente, dans sa longueur, une médiane confondue avec celle de la forme longitudinale de l'ouverture 121 qui lui est superposée.

Les ouvertures 111 et 121 étant de même longueur, la différence de surface entre les ouvertures 121 du deuxième écran maillé 12 et les ouvertures 111 du premier écran maillé 11 consiste en une différence de largeur entre les ouvertures 121 du deuxième écran maillé 12 et les ouvertures 111 du premier écran maillé 12. Cette différence est de préférence sensiblement supérieure à 40 µm. En outre, les ouvertures 121 du deuxième écran maillé 12 sont d'autant plus préférentiellement sensiblement centrées sur les ouvertures 111 du premier écran maillé 11, que la différence de largeur entre les ouvertures 121 du deuxième écran maillé 12 et les ouvertures 111 du premier écran maillé 11 est proche de sa valeur minimale, soit sensiblement 40 µm.

Plus particulièrement, la deuxième couche 32 imprimée est de préférence moins large que la première 31, d'au moins 20 µm de chaque côté, typiquement de 50 µm de chaque côté, pour que le deuxième écran maillé 12 ait un support suffisant pour s'appuyer de façon stable sur les nervures 211 du premier motif 21.

De façon plus générale, il est préféré que la différence de surface entre chaque ouverture 121 du deuxième écran maillé 12 et chaque ouverture 111 du premier écran maillé 11 à laquelle elle se superpose soit comprise entre 5% et 20% d'une surface de l'ouverture 111. De la sorte, l'on s'assure que le deuxième écran maillé 12 ait un support pour s'appuyer de façon stable sur les nervures 211 du premier motif 21, que les ouvertures 111 et 121 puissent ou non être centrées les unes sur les autres.

Il est à noter ici que les ouvertures 111 et 121, de même que les nervures 211 et 221, ne sont limitées ni à une forme droite, ni à une répartition parallèle.

Plus particulièrement, on distingue principalement trois modes de circulation des réactifs ou d'un liquide de refroidissement dans les canaux d'écoulement 2 :
- les canaux en serpentin : un ou plusieurs canaux parcourent l'ensemble de la zone active en plusieurs allers-retours ;
- les canaux parallèles : un faisceau de canaux parallèles et traversants parcourt la zone active de part en part ; et
- les canaux interdigités : un faisceau de canaux parallèles et bouchés parcourt la zone active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Le procédé de fabrication selon le premier aspect de l'invention est adapté à la fabrication de guides d'écoulement 1 au moins selon n'importe lequel des trois modes de circulation énoncés ci-dessus.

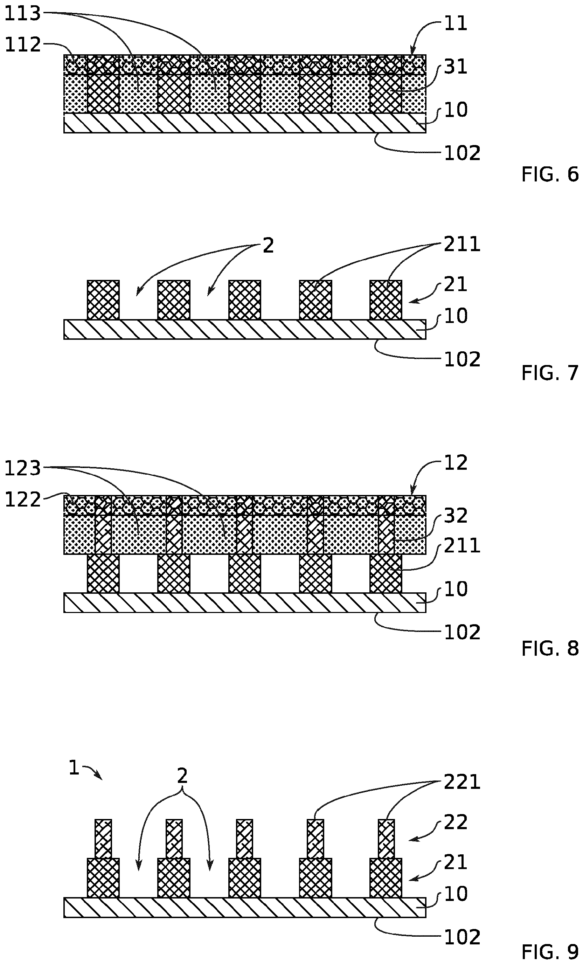

En référence aux figures 6 à 9, le procédé de fabrication selon le premier aspect de l'invention comprend en outre les étapes suivantes, réalisées sur une première face 101 du substrat 10 :
- Imprimer une première couche 31 d'une première encre électriquement conductrice par sérigraphie à l'aide du premier écran maillé 11, par exemple de la façon illustrée sur la figure 6,
- Former le premier motif 21 de nervures 211 par séchage de la première couche 31, par exemple de la façon illustrée sur la figure 7,
- Positionner le deuxième écran maillé 12 de sorte qu'il repose en partie sur chacune des nervures 211 du premier motif 21, puis
- Imprimer une deuxième couche 32 d'une deuxième encre électriquement conductrice par sérigraphie à l'aide du deuxième écran maillé 12 tel que précédemment positionné, par exemple de la façon illustrée sur la figure 8.

L'on obtient ainsi une superposition du deuxième motif 22 sur le premier motif 21 après séchage de la deuxième couche 32, par exemple de la façon illustrée sur la figure 9.

Notons ici que, selon l'exemple illustré sur les figures 5A et 5C dans lequel chaque ouverture 111 et chaque ouverture 121 qui lui est superposée peuvent être centrées entre elles, lorsque les premiers et deuxième écrans maillés 11 et 12 sont superposés entre eux, les ouvertures 121 du deuxième écran maillé 12 sont configurées et positionnées pour pouvoir être sensiblement centrées sur les nervures 211 du premier motif 21 lors du positionnement du deuxième écran maillé 12 sur les nervures 211 du premier motif 21.

Ainsi, il apparaît que la mise en œuvre du procédé selon le premier aspect de l'invention permet effectivement une impression de type pyramidale dans laquelle la couche 32 d'encre conductrice à imprimer sur la couche 31 déjà existante est moins large. Le deuxième écran 12, reposant, lors de l'impression de la deuxième couche 32, sur les nervures 211 du premier motif 21, et non sur le substrat 10, est situé, lors de l'impression de la deuxième couche 32, à une distance sensiblement égale à l'épaisseur des nervures 211 du premier motif 21 relativement au substrat 10, ce qui va permettre de gagner en hauteur imprimable.

Notons que, comme illustré sur la figure 8, le deuxième écran maillé 12 repose plus particulièrement sur une partie de chacune des nervures 211 du premier motif 21, et en particulier sur une partie de leurs sommets, par une partie de son émulsion 123.

Il est possible, le cas échéant, de fabriquer, grâce à un mode de réalisation particulier du procédé selon le premier aspect de l'invention, une impression pyramidale à plus de deux étages.

À cette fin, le procédé selon le premier aspect de l'invention peut comprendre en outre les étapes suivantes :
- fournir un troisième écran maillé comprenant des ouvertures configurées pour former un troisième motif de nervures du premier guide d'écoulement 1,
   le troisième motif étant superposable au deuxième motif 22 et les ouvertures du troisième écran maillé étant d'une surface réduite relativement aux ouvertures 121 du deuxième écran maillé 12,
- positionner le troisième écran maillé de sorte qu'il repose en partie sur chacune des nervures 221 du deuxième motif 22, puis
- imprimer une troisième couche d'encre électriquement conductrice par sérigraphie à l'aide du troisième écran maillé tel que précédemment positionné, de sorte à obtenir une superposition du troisième motif sur le deuxième motif 22 après séchage de la troisième couche.

Comme dans l'exemple illustré sur les figures 5A et 5C, il est en outre possible que les ouvertures du troisième écran maillé soient configurées et positionnées pour pouvoir être sensiblement centrées sur les nervures 221 du deuxième motif 22 lors du positionnement du troisième écran maillé sur les nervures 221 du deuxième motif 22.

Cette opération, de croissance pyramidale, est renouvelable autant de fois que voulu, tant que la dernière couche imprimée est assez large pour soutenir une nouvelle couche (typiquement tant que la largeur de la dernière couche imprimée est sensiblement supérieure à 200 µm) et tant que des masques de sérigraphie de taille plus fine sont disponibles.

Une telle croissance pyramidale présente un gain en termes de rapidité de mise en œuvre du procédé de fabrication en limitant le nombre d'étapes d'impression (potentiellement, il n'y a pas d'étapes d'élargissement des nervures précédemment formées) sans compromis sur la hauteur des nervures formées, les étages élevés plus étroits compensant le cas échéant le désavantage qu'il y a, dans le cadre d'une telle croissance pyramidale, à partir d'une base qui, devant être suffisamment large pour supporter au moins deux étages, réduit nécessairement, à son niveau, la section de passage de fluide dans les canaux.

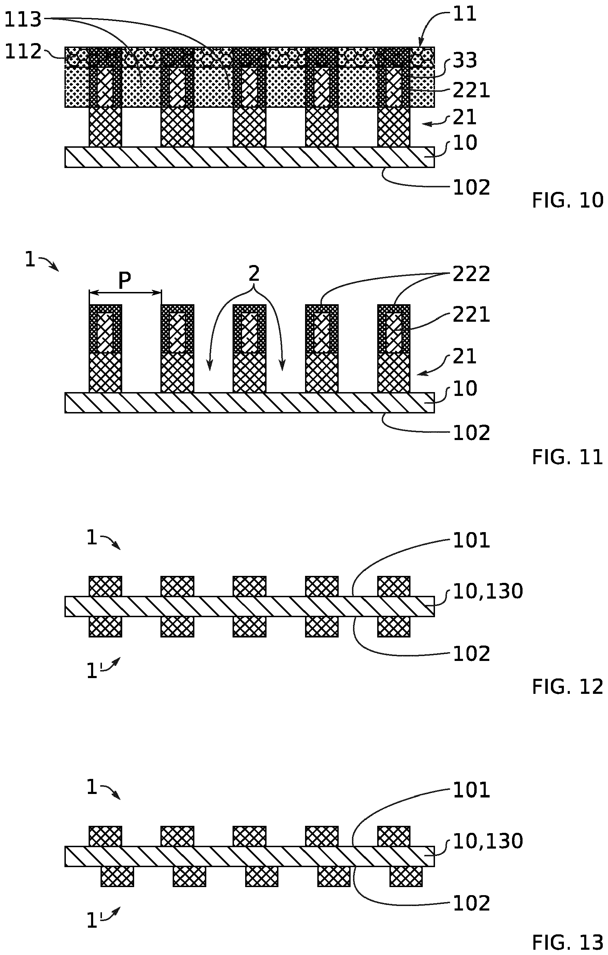

Cependant, si une impression pyramidale à plus de deux étages est rendue possible par le procédé de fabrication selon le premier aspect de l'invention, il est plus avantageusement envisagé que, partant de la configuration illustrée sur la figure 9, le procédé selon le premier aspect de l'invention comprenne en outre, par exemple de la façon illustrée sur la figure 10, les étapes suivantes :
- Positionner le premier écran maillé 11 de sorte qu'il repose en partie sur chacune des nervures 221 du deuxième motif 22, les ouvertures 111 du premier écran maillé 11 étant en partie occupées par au moins une partie des nervures 221 du deuxième motif 22, et étant de préférence sensiblement centrées sur les nervures 221 du deuxième motif 21, et
- Imprimer une troisième couche 33 d'une troisième encre électriquement conductrice par sérigraphie à l'aide du premier écran maillé 11 tel que précédemment positionné.

De la sorte, l'on obtient un élargissement des nervures 221 du deuxième motif 22 et par voie de conséquence des nervures élargies 222, après séchage de la troisième couche d'encre 32, par exemple de la façon illustrée sur la figure 11.

Notons que, comme illustré sur la figure 10, le premier écran maillé 11 repose plus particulièrement sur chacune des nervures 221 du deuxième motif 22, et en particulier sur leurs sommets, par une partie de son maillage 112, lors de l'impression de la troisième couche 33.

Notons en outre que, comme illustré sur la figure 11, le dépôt de la troisième couche 33 d'encre électriquement conductrice peut également aboutir à un accroissement supplémentaire des nervures relativement à la hauteur des nervures 221 du deuxième motif 22. Cet accroissement est toutefois limité par l'épaisseur du maillage 112 du premier écran maillé 11.

Il apparaît qu'il est alors possible de faire croître les nervures 222, en doublant, en triplant, voir même en quadruplant, leur hauteur, en répétant autant de fois la séquence d'étapes suivantes :
- positionner le deuxième écran maillé 12 de sorte qu'il repose en partie sur chacune des nervures élargies 222, puis
- imprimer une autre couche d'une encre électriquement conductrice par sérigraphie à l'aide du deuxième écran maillé 12 tel que précédemment positionné, de sorte à obtenir, après séchage, une superposition du deuxième motif sur les nervures élargies 22, puis
- positionner le premier écran maillé 11 de sorte qu'il repose en partie sur chacune des nervures du deuxième motif précédemment imprimé, les ouvertures 111 du premier écran maillé 11 étant en partie occupées par au moins une partie des nervures du deuxième motif superposées aux nervures élargies 222, et de préférence sensiblement centrées sur lesdites nervures du deuxième motif, et
- imprimer une autre couche d'une encre électriquement conductrice par sérigraphie à l'aide du premier écran maillé 11 tel que précédemment positionné.

Chaque répétition de la séquence d'étapes énoncée ci-dessus permet un accroissement des nervures d'une hauteur sensiblement égale à celle des nervures élargies 222, sans compromis sur la largeur des étages supérieurs des nervures.

Par exemple, on appelle « impression(s) pyramidale(s) par alternance » ces variantes de la technique d'impression pyramidale décrite plus haut.

Une telle technique d'impressions pyramidales par alternance permet à la fois d'accroître la hauteur des nervures et d'assurer un bon appui à chaque écran maillé utilisé pour imprimer une nouvelle couche d'encre, en ajoutant au moins une étape d'impression utilisant le premier écran maillé 11, ou en alternative un écran maillé de largeur d'ouvertures très proche. Les nervures 221 fines déjà ajoutées sur le premier motif 21 sont, à chaque alternance, complétées par un nouvel apport 33 d'encre électriquement conductrice.

On obtient ainsi des nervures 222 présentant sensiblement une même largeur que la largeur des nervures 211 du premier motif 21. On peut alors recommencer et empiler des couches en partant toujours de la même largeur de nervures, sans avoir à posséder plus de deux écrans maillés (ou équivalemment masques de sérigraphie) et sans être limité par la largeur des premières nervures 211 formées (contrairement à la technique d'impression dite pyramidale décrite plus haut).

De telles nervures élargies 222 présentes notamment, relativement aux nervures 221 du deuxième motif 22, une meilleure tenue mécanique et une plus grande surface de contact, en particulier électrique, avec d'autres composants du réacteur électrochimique qui sont destinés à être assemblés sur le premier guide d'écoulement 1, d'une des façons illustrées et discutées ci-dessous en référence aux figures 12 à 20.

Sur chacune des figures 6 à 11, l'usage de textures différentes entre elles pour illustrer chaque encre utilisée montre que chaque étape d'impression peut être réalisée avec une encre électriquement conductrice qui lui est propre. Ainsi, chaque nervure élargie 222 peut être constituée à partir d'une, deux ou trois encres électriquement conductrice. Il est ainsi possible de jouer sur la(les) constitution(s) des encres électriquement conductrice imprimée(s), par exemple pour faire varier leur qualité de conducteur électrique, leur qualité de tenue mécanique, ou le coût de fabrication associé à la mise en œuvre du procédé selon les différentes variantes du premier aspect de l'invention.

Plus particulièrement, la possibilité de faire varier la formulation de l'encre de chacune des couches permet par exemple :
- de faire varier l'angle de mouillage de la dent selon sa hauteur, afin d'améliorer l'évacuation d'eau de la cellule électrochimique dans laquelle le guide d'écoulement 1 est destiné à être intégré, et/ou
- au dépôt le plus fin (celui des nervures 221 du deuxième motif 22 dans l'exemple illustré sur la figure 11) d'avoir des caractéristiques mécaniques différentes, comme par exemple une plus grande rigidité ou une meilleure cohésion, le cas échéant au détriment de sa conductivité électrique, et/ou
- au dépôt le plus fin (celui des nervures 221 du deuxième motif 22 dans l'exemple illustré sur la figure 11) de contenir éventuellement des éléments (par exemple des particules métalliques) peu compatibles avec le milieu environnant de la pile à combustible dont il est destiné à faire partie, du fait que ce dépôt est encapsulé (notamment par au moins trois de ses côtés de la façon illustrée sur la figure 11) par le dépôt le plus large (celui de la troisième couche 33), et si le dépôt le plus large est suffisamment protecteur.

L'invention offre ainsi une possibilité de variation avantageuse des encres électriquement conductrice à imprimer. Toutefois, il est préférable que chacune de ces encres puisse être qualifiée d'encre à thixotropie très élevée. Plus particulièrement, une telle encre peut être caractérisée par le fait que son impression par sérigraphie puisse effectivement être réalisée en lui appliquant, de la façon illustrée sur la figure 4, une contrainte de cisaillement, l'encre présentant :
- une viscosité sensiblement comprise entre 70 et 500 Pa.s lorsqu'une vitesse de cisaillement sensiblement égale à 0,1 s⁻¹ lui est appliquée, et
- une viscosité sensiblement comprise entre 2,5 et 7 Pa.s lorsqu'une vitesse de cisaillement sensiblement égale à 100 s⁻¹ lui est appliquée.

Un autre paramètre relatif au guide d'écoulement 1 fabriqué par mise en œuvre du procédé selon le premier aspect de l'invention concerne la largeur des canaux d'écoulement 2. Cette dernière est définie, selon les modes de réalisation décrits ci-dessus, par le premier écran maillé 11. En effet, l'émulsion 113 du premier écran maillé 11 présente un motif qui est le négatif du premier motif 21 des nervures 211 et qui définit, entre ces dernières, la largeur des canaux d'écoulement 2 du guide 1. Par ailleurs, rappelons que la largeur des nervures 211 du premier motif 21 est définie par les ouvertures 111 du premier écran maillé 11. Il apparaît donc que, notamment lorsque le premier écran maillé 11 définit des nervures 211 présentant un facteur de forme (entre largeur et hauteur) sensiblement égale à 1 et des canaux d'écoulement 2 d'une largeur sensiblement égale à la largeur des nervures 211, la largeur des canaux d'écoulement 2 peut par mise en œuvre du procédé selon le premier aspect de l'invention être in fine sensiblement comprise entre 1 et 4 fois la largeur des nervures 211 du premier motif 21, de préférence sensiblement comprise entre 1 et 2 fois la largeur des nervures 211 du premier motif 21, et encore plus préférentiellement sensiblement égale à la largeur des nervures 211 du premier motif 21. Ainsi, puisque le facteur de forme entre largeur et profondeur des canaux d'écoulement 2 n'est plus limité à 1 grâce au procédé de fabrication selon le premier aspect de l'invention, diminuer la largeur du pas dent/canal, référencé P sur la figure 11, ne conduit pas inexorablement à une réduction de la profondeur des canaux d'écoulement 2. Le verrou technologique qui jusque-là limitait l'intérêt des circuits fluidiques imprimés est donc avantageusement levé grâce aux différentes variantes décrites ci-dessus du procédé de fabrication selon le premier aspect de l'invention.

Il est en outre possible de répéter le procédé de fabrication selon le premier aspect de l'invention sur la seconde face 102 du substrat 10, de sorte à fabriquer sur cette face 102 un second guide d'écoulement 1', par exemple d'une des façons illustrées sur les figures 12 à 14. Notons ici que ces exemples de réalisation sont plus particulièrement adaptés à un substrat comprenant, ou étant constitué de, une simple plaque électriquement conductrice 130, par opposition à une couche d'électrode 110 et une couche de diffusion gazeuse 120 du réacteur électrochimique.

Une telle plaque électriquement conductrice 130 peut par exemple être constituée à base d'un métal par exemple choisi parmi l'acier inoxydable, l'aluminium, ou le titane. Le métal peut par exemple être protégé par un dépôt carboné ou métallisé ou un polymère composite conducteur d'électrons incluant une couche de métallisation, pour protéger la plaque 130 contre la corrosion ou pour diminuer les résistances de contact. La plaque 130 peut être plus ou moins rigide. Elle a de préférence une épaisseur comprise entre 0,01 et 1 mm, plus favorablement comprise entre 0,02 et 0,1mm.

Dans l'exemple illustré par la figure 12, un premier guide d'écoulement 1 a été fabriqué par mise en œuvre du procédé selon le premier aspect de l'invention sur une face supérieure 201 de la plaque électriquement conductrice 130 et un second guide d'écoulement 1' a été fabriqué sur une face inférieure 202 de la plaque 130. Des canaux d'écoulement sont ainsi ménagés de part et d'autre de la plaque 130 entre les nervures. Dans cet exemple, les nervures des deux faces opposées s'étendent de façon parallèle, présentent de mêmes dimensions et sont superposées : les nervures des deux faces sont le symétrique l'une de l'autre par rapport à la plaque 130.

Dans l'exemple illustré par la figure 13, les nervures des deux faces opposées s'étendent de façon parallèle et présentent de mêmes dimensions, mais sont décalées selon une direction transversale à leur direction principale d'extension.

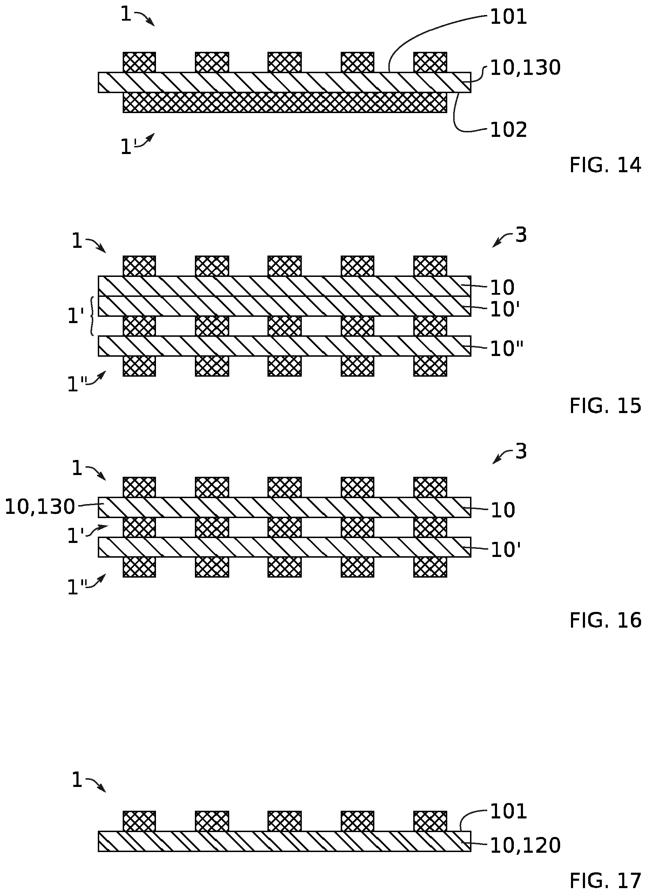

Dans l'exemple de la figure 14, les nervures des deux faces opposées s'étendent selon des directions perpendiculaires.

Ces exemples ont vocation à montrer que toute variation entre premier guide d'écoulement 1 fabriqué sur la première face 101 du substrat 10 et second guide d'écoulement 1' fabriqué sur la deuxième face 102 du substrat 10 est envisageable, la fabrication d'une des guides d'écoulement 1 et 1' selon l'une quelconque des variantes du premier aspect de l'invention ne contraignant pas la fabrication de l'autre selon l'une quelconque des variantes du premier aspect de l'invention. Par exemple, chacun des premier et second guide d'écoulement 1 et 1' fabriqués de part et d'autre d'une même plaque 130 peut être d'un mode quelconque parmi les trois modes de circulation décrits plus haut.

Un exemple de mise en œuvre du procédé selon le premier aspect de l'invention permet la fabrication d'un circuit fluidique conducteur ayant :
- Une largeur de dent 222 de 400 µm,
- Une largeur de canal 2 de 400 µm, et
- Une hauteur de dent de 400 µm.

À cette fin, le premier écran maillé 11 peut présenter une épaisseur d'émulsion 113 de 200 µm et largeur d'ouverture 111 des motifs de 400 µm, et le deuxième écran maillé 12 peut présenter une épaisseur d'émulsion 123 de 200 µm et largeur d'ouverture 121 les motifs de 300 µm.

La première étape d'impression permet de former des dents 211 de 400 µm de large pour 200 µm de haut. Les deuxième et troisièmes étapes d'impression permettent de former des dents élargies 222 de 400 microns de large pour 400 µm de haut.

Un deuxième aspect de l'invention concerne un procédé de fabrication d'une plaque bipolaire, notamment destinée à une application PEM. Le procédé de fabrication selon le deuxième aspect de l'invention comprend tout d'abord la mise en œuvre d'une des variantes décrites plus haut du procédé de fabrication selon le premier aspect l'invention. Il consiste ensuite à assembler entre eux une pluralité de guides d'écoulement 1,1' ainsi fabriqués. Deux exemples de telles plaques bipolaires 3 sont illustrés sur chacune des figures 15 et 16.

La figure 15 illustre une plaque bipolaire 3, formée par la superposition de guides d'écoulement 1, 1' et 1 " obtenus par mise en œuvre d'une des variantes décrites plus haut du procédé de fabrication selon le premier aspect l'invention. Dans cet exemple, trois guides d'écoulement 1, 1' et 1 " sont fabriqués à partir de trois substrats 10, 10' et 10". Ces trois guides d'écoulement comportent des nervures sur une unique face. Le guide 1 supérieur présente des nervures en saillie depuis la face supérieure du substrat 10. Le guide intermédiaire 1' et le guide inférieur 1" présentent des nervures 31 en saillie depuis les faces inférieures des substrats 10' et 10" respectivement. Lorsque ces trois guides 1, 1', et 1" sont superposées, des canaux d'écoulement d'un réactif sont ménagés entre les nervures du guide supérieur 1, des canaux d'écoulement d'un liquide caloporteur sont ménagés entre les nervures du guidage intermédiaire 1', et des canaux d'écoulement d'un autre réactif sont ménagés entre les nervures du guide inférieur 1".

La figure 16 illustre une plaque bipolaire 3, formée par la superposition de guides d'écoulement 1, 1' et 1 " fabriqués à partir de deux substrats 10 et 10' par mise en œuvre d'une des variantes décrites plus haut du procédé de fabrication selon le premier aspect l'invention. Dans cet exemple, trois guides d'écoulement 1, 1' et 1 " sont superposés. Le guide supérieur 1 et le guide intermédiaire 1' partage un même substrat 10 et forment configuration telle qu'illustrée à la figure 4 dans laquelle le substrat 10 est une simple plaque électriquement conductrice 130. Cette plaque 130 telle qu'illustré sur comporte donc des nervures en saillie depuis ses deux faces. Le guide inférieur 1" présente des nervures en saillie depuis la face inférieure du substrat 10'. Comme sur la figure 15, lorsque les trois guides 1, 1' et 1 " sont superposées, des canaux d'écoulement d'un réactif sont ménagés entre les nervures du guide supérieur 1, des canaux d'écoulement d'un liquide caloporteur sont ménagés entre les nervures du guidage intermédiaire 1', et des canaux d'écoulement d'un autre réactif sont ménagés entre les nervures du guide inférieur 1".

La figure 17 est une vue en coupe schématique d'un guide d'écoulement selon un autre mode de réalisation de l'invention. Le substrat 10 sur lequel la couche d'encre conductrice a été imprimée par sérigraphie est ici une couche de diffusion gazeuse 120. L'encre peut être imprimée sur une face 101 de la couche de diffusion gazeuse 120, avec des paramètres d'impression similaires à ceux décrits plus haut. L'on obtient, sur la couche de diffusion gazeuse 120, un guide d'écoulement 1 par mise en œuvre d'une des variantes décrites plus haut du procédé de fabrication selon le premier aspect l'invention.

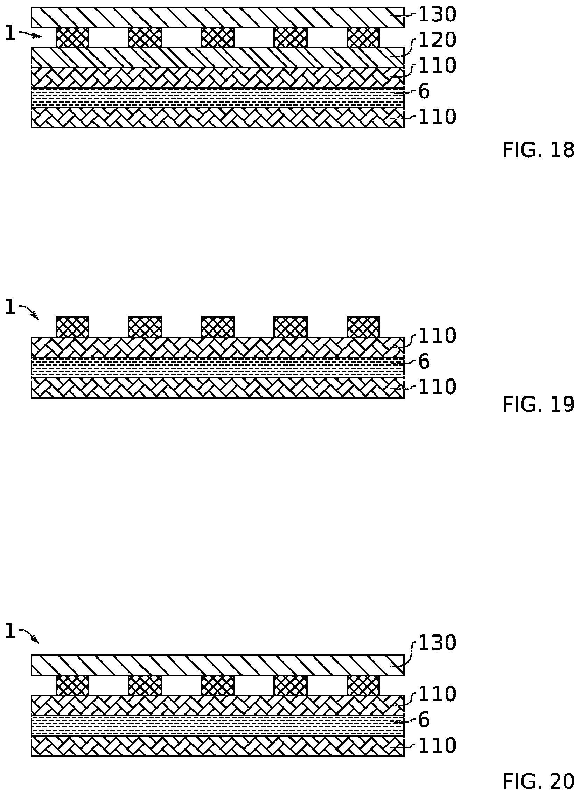

La figure 18 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Une plaque électriquement conductrice 130, telle que celle détaillée dans les modes de réalisation décrits en référence aux figures 12 à 14, peut être plaquée contre le sommet des nervures d'un guide d'écoulement 1. Un assemblage membrane-électrodes, incluant une membrane 6 et deux électrodes 110, est plaqué contre une face inférieure d'une couche de diffusion gazeuse 120 supportant les nervures du guide d'écoulement.

La figure 19 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Le substrat 110 sur lequel au moins les deux premières couches 31 et 32 d'encre électriquement conductrice ont été imprimées par sérigraphie est ici une électrode 110 solidarisée, préalablement ou postérieurement à l'impression, à une membrane échangeuse de protons 6 d'un assemblage membrane-électrodes. L'encre peut être imprimée sur une face de l'électrode 110, avec des paramètres d'impression similaires à ceux décrits plus haut.

La figure 20 est une vue en coupe schématique de l'assemblage illustré sur la figure 19, associé à un autre composant d'un réacteur électrochimique, à savoir une plaque électriquement conductrice 130. Cette dernière, qui peut être telle que dans les modes de réalisation décrits en référence aux figures 12 à 14, peut être plaquée contre le sommet des nervures s'étendant depuis la surface d'une des électrodes 110.

L'invention n'est pas limitée aux modes de réalisation précédemment décrits.

Par exemple, chaque couche 31, 32 et 33 d'encre électriquement conductrice peut être imprimée plusieurs fois, formant alors chacune un multicouche. Ceci peut permettre d'augmenter la densité des dépôts et/ou leur hauteur. Dans ce cas, la phase de séchage est répétée autant de fois que chaque multicouche comprend de couches.

Notons ici que les phases de séchage peuvent par exemple être réalisées en étuve à une température sensiblement égale à 80°C pendant un temps sensiblement égal à 10 minutes.

La présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

Notons enfin que la présente invention permet la fabrication de circuit fluidique présentant des canaux d'écoulement fins, c'est-à-dire de largeur inférieure à 400 µm, qui ne sont pas réalisables en séries par emboutissage.

## Revendications

1. Procédé de fabrication d'au moins un guide d'écoulement (1, 1') pour réacteur électrochimique, comprenant les étapes suivantes :
a. Fournir un substrat (10),
b. Fournir un premier écran maillé (11) comprenant des ouvertures (111) configurées pour former un premier motif (21) de nervures (211) d'un premier guide d'écoulement (1),
c. Fournir un deuxième écran maillé (12) comprenant des ouvertures (121) configurées pour former un deuxième motif (22) de nervures (221) du premier guide d'écoulement (1),
le deuxième motif (22) étant tel que, lorsque le deuxième écran (12) maillé est superposé au premier écran maillé (11), les ouvertures (121) du deuxième écran maillé (12) sont positionnables de sorte que chacune d'entre elles se situe, simultanément aux autres, au droit d'une ouverture (111) du premier écran maillé (11) et les ouvertures (221) du deuxième écran maillé (12) étant d'une surface réduite relativement aux ouvertures (211) du premier écran maillé (21) ; puis
Sur une première face (101) du substrat (10) :
d. Imprimer une première couche (31) d'une première encre électriquement conductrice par sérigraphie à l'aide du premier écran maillé (11),
e. Former le premier motif (21) de nervures (211) par séchage de la première couche (31),
f. Positionner le deuxième écran maillé (12) de sorte qu'il repose en partie sur chacune des nervures (211) du premier motif (21), chaque ouverture (121) du deuxième écran maillé (12) étant positionnée au droit d'une nervure (211) du premier motif (21), puis
g. Imprimer une deuxième couche (32) d'une deuxième encre électriquement conductrice par sérigraphie à l'aide du deuxième écran maillé (12) tel que précédemment positionné,
de sorte à obtenir une superposition du deuxième motif (22) sur le premier motif (21) après séchage de la deuxième couche (32),
Le procédé comprenant en outre les étapes suivantes :
h. Positionner le premier écran maillé (11) de sorte qu'il repose en partie sur chacune des nervures (221) du deuxième motif (22), les ouvertures (111) du premier écran maillé (11) étant en partie occupées par au moins une partie des nervures (221) du deuxième motif (22), et
i. Imprimer une troisième couche (33) d'une troisième encre électriquement conductrice par sérigraphie à l'aide du premier écran maillé (11) tel que précédemment positionné,
de sorte à obtenir au moins un élargissement des nervures (221) du deuxième motif (22) et par voie de conséquence des nervures élargies (222), après séchage de la troisième couche d'encre (32).

2. Procédé selon la revendication précédente, dans lequel les ouvertures (121) du deuxième écran maillé (12) sont configurées et positionnées pour pouvoir être sensiblement centrées sur les nervures (211) du premier motif (21) lors du positionnement du deuxième écran maillé (12).

3. Procédé selon l'une quelconque des revendications précédentes, comprenant en outre au moins une fois la séquence d'étapes suivantes :
j. positionner le deuxième écran maillé (12) de sorte qu'il repose en partie sur chacune des nervures élargies (222), puis
k. imprimer une autre couche d'une encre électriquement conductrice par sérigraphie à l'aide du deuxième écran maillé (12) tel que précédemment positionné, de sorte à obtenir, après séchage, une superposition du deuxième motif sur les nervures élargies (222), puis
l. positionner le premier écran maillé (11) de sorte qu'il repose en partie sur chacune des nervures du deuxième motif précédemment imprimé, les ouvertures (111) du premier écran maillé (11) étant en partie occupées par au moins une partie des nervures du deuxième motif superposées aux nervures élargies (222), et
m. imprimer une autre couche d'une encre électriquement conductrice par sérigraphie à l'aide du premier écran maillé (11) tel que précédemment positionné,
de sorte à obtenir, après séchage, un élargissement des nervures du deuxième motif et par voie de conséquence de nouvelles nervures élargies.

4. Procédé selon l'une quelconque des revendications précédentes, dans lequel la différence de surface entre les ouvertures (121) du deuxième écran maillé (12) et les ouvertures (111) du premier écran maillé (11) est telle que, lorsque le deuxième écran maillé (12) est positionné sur le premier motif (21), le deuxième écran maillé (12) repose sur 5 à 20% d'une surface supérieure des nervures (211) du premier motif (21).

5. Procédé selon l'une quelconque des revendications précédentes, dans lequel la différence de surface entre les ouvertures (121) du deuxième écran maillé (12) et les ouvertures (111) du premier écran maillé (11) comprend, voire consiste en, une différence de largeur entre les ouvertures (121) du deuxième écran maillé (12) et les ouvertures (111) du premier écran maillé (12) qui est sensiblement supérieure à 40 µm.

6. Procédé selon l'une quelconque des revendications précédentes, dans lequel, chaque écran maillé (11, 12) comprenant un maillage (112, 122) et une émulsion (113, 123), le deuxième écran maillé (12) est positionné sur le premier motif (21), de sorte qu'une partie de son émulsion (123) repose en partie sur chacune des nervures (211) du premier motif (21).

7. Procédé selon l'une quelconque des revendications précédentes, dans lequel, chaque écran maillé (11, 12) comprenant un maillage (112, 122) et une émulsion (113, 123), le premier écran maillé (11) est positionné sur le deuxième motif (22) de sorte qu'une partie de son maillage (112) repose sur chacune des nervures (221) du deuxième motif (22).

8. Procédé selon l'une quelconque des revendications précédentes, dans lequel, chaque écran maillé (11, 12) comprenant un maillage (112, 122) et une émulsion (113, 123),
• l'émulsion (113, 123) présente une épaisseur sensiblement comprise entre 100 et 200 µm, de préférence sensiblement comprise entre 150 et 200 µm, et encore plus préférentiellement sensiblement égale à 200 µm, et/ou
• le maillage (112, 122) présente une épaisseur sensiblement comprise entre 50 et 150 µm, de préférence sensiblement comprise entre 80 et 120 µm, et encore plus préférentiellement sensiblement égale à 100 µm.

9. Procédé selon l'une quelconque des revendications précédentes, dans lequel, le premier écran maillé (11) comprenant un maillage (112) et une émulsion (113), l'émulsion (113) du premier écran maillé (11) présentant un motif qui est le négatif du premier motif (21) et qui définit des canaux d'écoulement (2) du premier guide (1) entre les nervures (211) du premier motif (21) dont la largeur est définie par les ouvertures (111) du premier écran maillé (11), la largeur des canaux d'écoulement (2) est sensiblement comprise entre 1 et 4 fois la largeur des nervures (211) du premier motif (21), de préférence sensiblement comprise entre 1 et 2 fois la largeur des nervures (211) du premier motif (21), et encore plus préférentiellement sensiblement égale à la largeur des nervures (211) du premier motif (21).

10. Procédé selon l'une quelconque des revendications précédentes, dans lequel chaque impression par sérigraphie de chaque couche (31, 32, 33) d'encre électriquement conductrice est réalisée en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹.

11. Procédé de fabrication selon l'une quelconque des revendications précédentes, dans lequel le substrat (10) fourni comprend au moins l'un parmi une couche de diffusion gazeuse (120) du réacteur électrochimique, une couche d'électrode (110) du réacteur électrochimique et une plaque électriquement conductrice (130).

12. Procédé selon l'une quelconque des revendications précédentes, dans lequel, le substrat (10) fourni étant une plaque électriquement conductrice (130), les étapes d à g, voire les étapes d à i, du procédé sont répétées sur la deuxième face (102) du substrat (10) pour y fabriquer un second guide d'écoulement (1').

13. Procédé selon la revendication précédente et la revendication 3, dans lequel les étapes j à m sont répétées sur la deuxième face (102) du substrat (10) pour y fabriquer le second guide d'écoulement (1').

14. Procédé de fabrication d'une plaque bipolaire (3) pour réacteur électrochimique, et en particulier pour pile à combustible à membrane échangeuse de protons, comprenant :
• la fabrication, par un procédé de fabrication selon l'une quelconque des revendications précédentes, d'au moins trois guides d'écoulement (1, 1', 1") sur au moins deux substrats (10, 10', 10"), et
• au moins un assemblage desdits au moins deux substrats (10, 10', 10") entre eux de sorte que l'assemblage présente un desdits au moins trois guides d'écoulement (1') entre deux desdits au moins deux substrats (10, 10', 10") et deux autres desdits au moins trois guides d'écoulement (1, 1") de part et d'autre desdits au moins deux substrats (10, 10', 10").

15. Guide d'écoulement (1, 1') pour réacteur électrochimique comprenant un substrat (10) sur au moins une des deux faces duquel s'étendent des nervures définissant des canaux d'écoulement, les nervures étant à base d'au moins un matériau électriquement conducteur et différent du matériau à base duquel le substrat (10) est constitué et présentant une épaisseur strictement supérieure à une largeur des canaux d'écoulement, dans lequel chaque nervure s'étend depuis l'au moins une des deux faces du substrat (10) par au moins une première portion constituée à base d'un premier matériau conducteur différent du substrat (10), au moins une deuxième portion s'étendant depuis la première portion, de largeur réduite relativement à la largeur de la première portion de chaque nervure et constituée à base d'un deuxième matériau conducteur différent du substrat, le cas échéant le deuxième matériau conducteur étant différent du premier matériau conducteur, et une troisième portion s'étendant d'un côté au moins, de préférence des deux côtés, de la deuxième portion, jusqu'à recouvrir le cas échéant la deuxième portion, la troisième portion présentant de préférence une largeur sensiblement égale à la largeur de la première portion et/ou de préférence s'étendant au droit de la première portion, la troisième portion étant constituée à base d'un troisième matériau conducteur, le cas échéant le troisième matériau conducteur étant différent de l'un au moins parmi le premier matériau conducteur et le deuxième matériau conducteur.
